# EUROPÄISCHE PATENTSCHRIFT

(11) **EP 0 465 754 B1**
(45) Veröffentlichungstag und Bekanntmachung des Hinweises auf die Patenterteilung: **13.04.1994**
(21) Anmeldenummer: 90890339.6
(22) Anmeldetag: 19.12.1990
(51) Int. Cl.: B26D 7/00, B29C 37/00

(54) **Vorrichtung zum Beschneiden räumlicher Formteile aus Kunststoff od. dgl.**
Apparatus for trimming of three-dimensional plastic parts or the like
Appareil pour la découpe de produits tridimensionnels en matière plastique ou similaire

(30) Priorität: 13.07.1990 AT 1492/90
(43) Veröffentlichungstag der Anmeldung: 15.01.1992
(73) Patentinhaber: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Heiner, Dipl.-Ing.

(56) Entgegenhaltungen:
- EP-A- 0 319 251
- FR-A- 1 448 209
- GB-A- 2 156 262
- US-A- 4 465 919
- US-A- 4 567 797
- KUNSTSTOFFBERATER Bd. 32, Nr. 6, Juni 1987, ISERNHAGEN HANNOVER, DE Seiten 28 -30; 'KUNSTSTOFFTEILE AUTOMATISCH ENTGRATEN'
- KUNSTSTOFFBERATER Bd. 34, Nr. 7/8, Juli 1989, ISERNHAGEN, DE Seiten 63 - 64; E.LOBEDANK: 'VOLLAUTOMATISCHE NACHBEARBEITUNG VON THERMOPLASTISCHEN FORMTEILEN.'
- PLASTVERARBEITER Bd. 35, Nr. 10, Oktober 1984, SPEYER, DE Seiten 92 - 96; E.NEISE: 'KONZEPTE ZUR AUTOMATISIERTEN NACHBEARBEITUNG.'

## Beschreibung

Die Erfindung bezieht sich auf eine Vorrichtung zum Beschneiden räumlicher Formteile aus Kunststoff od. dgl., mit einer Unterform zur Auflage der Formteile und einem relativ zur Unterform entlang einer Schnittbahn bewegbaren Schneidkopf, der um zwei zueinander normale Drehachsen drehverstellbar an einem Roboterarm od.dgl. gelagert ist, wobei die von der Unterform gebildete Auflagefläche entlang der Schnittbahn eine Unterbrechung aufweist (siehe US-A-4 465 919).

Räumliche Formteile aus Kunststoff, faserverstärktem Material, Gummi, Verbundwerkstoff usw. werden in den verschiedensten Gewerben und Branchen verwendet, beispielsweise als Verkleidungs- und Armaturenbretteile in der Fahrzeugindustrie, und diese Teile sind nach ihrer formgebenden Fertigung zu beschneiden, um einen sauberen, maßgerechten Randverlauf sicherstellen zu können. Auf Grund der gegebenen Materialeigenschaften der verwendeten Werkstoffe und der Raumform der einzuhaltenden Schnittbahnen bereitet dieses Beschneiden der Formteile aber bisher beträchtliche Schwierigkeiten. So muß ein Beschneiden mit dem Messer noch immer von Hand aus durchgeführt werden, was wegen der damit verbundenen Arbeitsintensität und Ungenauigkeit für einen industriellen Einsatz unbefriedigend ist und ein automatisiertes Beschneiden bleibt bisher einem Wasserstrahl- oder Laserschneiden vorbehalten. So ist aus der US-A-4 465 919 bereits eine Schneidvorrichtung für dreidimensionale Formteile bekannt, bei der eine die Formteile aufnehmende Unterform auf einem Roboterarm sitzt und entlang einer Schnittbahn an einem Laserkopf vorbeibewegt wird. Die Unterform muß aber zur Laserstrahlführung zweigeteilt sein, so daß die Abstützwirkung gerade in den Trennungsschlitz aufweisenden Schneidbereich recht schwach ist und für die beim Laserschneiden auftretenden geringen Schnittkräfte genügt, für die höheren Schnittkräfte eines Messerschnittes aber unzureichend wäre. Dazu kommt noch, daß beim Laserschneiden eine umständliche Strahlführung oft unvermeidbar ist, durch die hohen Temperaturen Materialveränderungen an der Schnittfläche auftreten und es außerdem durch das Verbrennen des Materials beim Schneiden zu einer gesundheitsschädlichen Gasbildung kommen kann.

Auch beim Wasserstrahlschneiden treten nur recht geringe Schnittkräfte auf, die keiner besonderen Abstützung des Werkstückes bedürfen. Durch den Wasserstrahl läßt sich daher ein frei über die der Schnittbahn entlang verlaufende Randkante der Unterform vorragender Überstand der Formteile ohne weitere Abstützung abtrennen, so daß schon ein bloßes Führen des Schneidkopfes entlang der vorbestimmten Schnittbahn das gewünschte Beschneiden mit sich bringt. Allerdings ist beim Wasserstrahlschneiden wiederum ein recht kompliziertes Wasserfangsystem einzurichten, der Düsenverschleiß ergibt einen kosten- und wartungsintensiven Betrieb und nicht zuletzt sind Lärmbelästigungen in Kauf zu nehmen.

Aus der EP-A-319 251 geht außerdem schon eine Vorrichtung zum Beschneiden von Flachmaterial als bekannt hervor, die einen Auflagetisch für das Material und ein über die Auflagefläche des Tisches verfahrbares Schneidaggregat mit einem ultraschallmesserbestückten Schneidkopf aufweist. Am Schneidkopf ist ein zusätzlicher Auflagearm angesetzt, der mit einem gelochten Ende das zu schneidende Material untergreift und so ein Eindringen der schneidenden Messerspitze in das Loch dieses Auflagearmes und damit ein ordnungsgemäßes Schneiden erlaubt. Allerdings eignet sich eine solche Schneidvorrichtung lediglich zum speziellen Schneiden von flexiblen Flachmaterialien und nicht zum Beschneiden räumlicher Formteile aus starrem Kunststoff.

Der Erfindung liegt daher die Aufgabe zugrunde, eine Vorrichtung der eingangs geschilderten Art zu schaffen, die mit verhältnismäßig einfachen Mitteln ein rationelles, automatisierbares Beschneiden räumlicher Formteile durch einen mechanischen Messerschnitt gewährleistet.

Die Erfindung löst diese Aufgabe dadurch, daß der Schneidkopf mit einem Messer, insbesondere ein mit Ultraschallfrequenz schwingendes Messer, bestückt ist und daß zur Unterbrechung der Auflagefläche in der Unterform eine der Schnittbahn folgende Schnittführungsnut vorgesehen ist. Dadurch wird der ganze Formteil mitsamt seinem wegzuschneidenden Überstand durch die Unterform abgestützt, wobei die Unterform wegen der Schnittführungsnut ganzteilig bleibt und gerade im Schnittbereich die erforderliche feste Auflage bildet, so daß die Formteile unabhängig von ihren nachgiebig-elastischen Materialeigenschaften od. dgl. einwandfrei mit einem Messer beschnitten werden können, welches Messer mit dem Roboterarm auch beliebig räumlich verlaufenden Schnittbahnen nachführbar ist. Die Schnittführungsnut bietet dabei dem die Wandstärke der Formteile durchdringenden Messer den für das Schneiden erforderlichen Freiraum unterhalb des Werkstückes, was ohne Beschädigung der Auflagefläche einerseits oder des Messers anderseits ein exaktes Schneiden der bis in untermittelbare Nähe der Schnittbahn satt abgestützten Formteile ermöglicht.

Weist die Schnittführungsnut eine Füllung aus elastischem Matrial, beispielsweise Polyurethan, auf, wird dem Formteil auch im Nutbereich eine Auflage und Abstützung gegeben und auch bei für einen Messerschnitt an sich ungünstigsten Materialeigenschaften wird ein ausgezeichnetes Schnittergebnis garantiert. Das elastische Material erlaubt trotz seiner abstützenden Wirkung für den Formteil das unbeeinträchtigte Eindringen der Messerspitze, es schützt das Messer und sorgt für eine dämpfende Wirkung im Schneidbereich. Diese Füllung kann außerdem einfach ausgetauscht werden und läßt sich so auch in ihren Eigenschaften an die zu schneidenden Formteile oder die Werkzeuge anpassen.

Zur Halterung der Formteile ist es möglich, die Unterform mit einer Oberform zu kombinieren, so daß der auf die Unterform aufgelegte Formteil zwischen Unter- und Oberform festklemmbar ist. Die Oberform, die auch als einfacher Niederhalter vorgesehen sein kann, erstreckt sich dabei nicht wie die Unterform über die Schnittbahn hinaus, sondern läßt für die Zugänglichkeit des Messers den Schnittbahnbereich an der Oberseite frei. Besonders vorteilhaft ist es aber, wenn die Unterform zur Halterung der Formteile unterdruckbeaufschlagbare Kanäle aufweist, die im Nebenbereich der Schnittführungsnut ausmünden, da so die Formteile aufwandsarm in unmittelbarer Nähe des Schnittvorganges an der Unterform angesaugt und niedergehalten werden. Zweckmäßigerweise sind die Kanäle beidseits der Führungsnut angeordnet, so daß nicht nur der Formteil selbst, sondern auch der Schnittabfall fixiert ist und sich ein besonders guter Halt beim Schneiden ergibt.

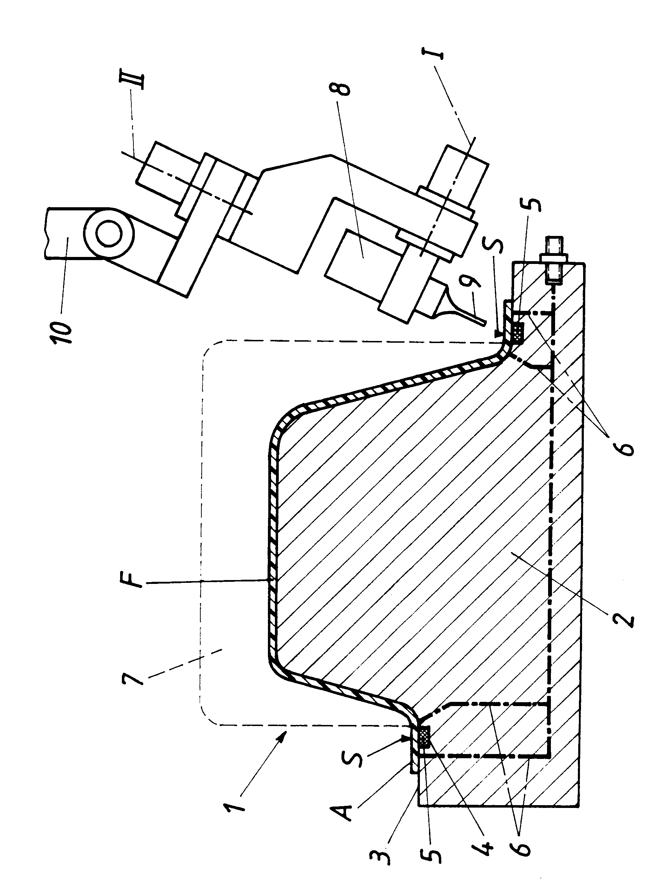

In der Zeichnung ist der Erfindungsgegenstand rein schematisch an Hand einer teilgeschnittenen Seitenansicht einer erfindungsgemäßen Vorrichtung näher veranschaulicht.

Um räumliche Formteile F aus Kunststoff, Gummi, faserverstärktem Werkstoff, Verbundmaterial od. dgl. sauber und exakt durch einen automatischen Messerschnitt beschneiden zu können, ist eine Vorrichtung 1 vorgesehen, die eine Unterform 2 zur Auflage des zu beschneidenden Formeiles F aufweist. Die Unterform 2 erstreckt sich mit ihrer Auflagefläche 3 über die Schnittbahn S des Beschneidevorganges hinaus und bietet so auch für den beim Beschneiden als Schnittabfall zurückbleibenden Überstand A eine satte Abstützung. Eine Schnittführungsnut 4 in der Unterform 2 folgt der Schnittbahn S, so daß ein Schneidmesser beim Schneiden die Wandstärke des Formteils F unbeschadet durchdringen und in die Nut eingreifen kann. Die Schnittführungsnut 4 ist mit einer Füllung 5 aus elastischem Material versehen, wodurch auch im Schnittbahnbreich ohne Beeinträchtigung des Schnittvorganges eine Abstützung für den Formteil F entsteht.

Zur Halterung des Formteils F sind unterdruckbeaufschlagbare Kanäle 6 in der Unterform 2 vorgesehen, die im Nahbereich der Schnittführungsnut 4 ausmünden und während des Beschneidens den Formteil F an der Auflagefläche 3 fixierend ansaugen. Zur Aufnahme größerer Schnittkräfte kann auch eine mit der Unterform 2 zusammenwirkende, nur strichliert angedeutete Oberform 7 vorgesehen sein, die gegen die Unterform 2 niederdrückbar ist und den Formteil F festklemmt. Diese Oberform 7 erstreckt sich allerdings nur bis in den Bereich der Schnittführungsnut 4 und läßt den Schnittbahnbereich S frei zugänglich.

Zum Beschneiden selbst gibt es einen messerbestückten Schneidkopf 8, der vorzugsweise ein mit Ultraschallfrequenz schwingendes Messer 9 aufnimmt, damit für eine besonders exakte, die Formteilhalterung wenig belastende Schnittführung gesorgt wird. Der Schneidkopf 8 ist, um auch einem beliebigen räumlichen Schnittverlauf folgen zu können, um zwei zueinander normale Drehachsen I, II drehverstellbar an einem 3-Achsen-gesteuerten Roboterarm 10 angesetzt, so daß sich insgesamt ein 5-Achsen-gesteuerter Schneidautomat ergibt, der ein einwandfreies, vollautomatisches Beschneiden der entsprechend satt und durchgehend abgestützten Formteile F erlaubt.

## Patentansprüche

1. Vorrichtung (1) zum Beschneiden räumlicher Formteile (F) aus Kunststoff od. dgl., mit einer Unterform (2) zur Auflage der Formteile (F) und einem relativ zur Unterform (2) entlang einer Schnittbahn (S) bewegbaren Schneidkopf (7), der um zwei zueinander normale Drehachsen (I, II) drehverstellbar an einem Roboterarm (10) od. dgl. gelagert ist, wobei die von der Unterform (2) gebildete Auflagefläche (3) entlang der Schnittbahn (S) eine Unterbrechung aufweist, dadurch gekennzeichnet, daß der Schneidkopf (8) mit einem Messer, insbesondere ein mit Ultraschallfrequenz schwingendes Messer (9), bestückt ist und daß zur Unterbrechung der Auflagefläche (3) in der Unterform (2) eine der Schnittbahn (S) folgende Schnittführungsnut (4) vorgesehen ist.

2. Vorrichtung nach Anspruch 1, dadurch gekennzeichnet, daß die Schnittführungsnut (4) eine Füllung (5) aus elastischem Material, beispielsweise Polyurethan, aufweist.

3. Vorrichtung nach Anspruch 1 oder 2, dadurch gekennzeichnet, daß die Unterform (2) zur Halterung der Formteile (F) unterdruckbeaufschlagbare Kanäle (6) aufweist, die im Nebenbereich der Schnittführungsnut (4) ausmünden.

## Claims

1. A device (1) for cutting three-dimensional moulded parts (F) made of plastics or the like, the device comprising a mould bottom (2) for holding the moulded parts (F) and a cutting head (7) movable relative to the mould bottom (2) along a cutting track (S) and mounted on a robot arm (10) or the like so as to be rotatable around two axes (I, II) at right angles to one another, the bearing surface (3) formed by the mould bottom (2) having an interruption along the cutting track (S), characterised in that the cutting head (8) is equipped with a knife, more particularly a knife (9) vibrating at ultrasonic frequency, and a cut-guiding groove (4) following the cutting track (S) is provided in the mould bottom (2) so as to interrupt the bearing surface (3).

2. A device according to claim 1, characterised in that the cut-guiding groove (7) has a filling (5) of resilient material, e.g. polyurethane.

3. A device according to claim 1 or 2, characterised in that the mould bottom (2) has ducts (6) which can be subjected to negative pressure for holding the moulded parts (F) and open into the region near the cut-guiding groove (4).

## Revendications

1. Dispositif (1) pour découper des pièces moulées (F) tridimensionnelles en matière synthétique ou analogue, avec un moule inférieur (2), destiné à servir de support aux pièces moulées (F) et une tête de coupe (7), déplaçable par rapport au moule inférieur (2), le long d'une trajectoire de coupe (S), et montée à rotation autour de deux axes de rotation (I, II) perpendiculaires entre eux, sur un bras de robot (10) ou analogue, de façon à pouvoir effectuer un déplacement de réglage, la surface de support (3) constituée par le moule inférieur (2) présentant le long de la trajectoire de coupe (S) une interruption,
caractérisé en ce que la tête de coupe (8) est équipée d'une lame, en particulier d'une lame (9) oscillant à la fréquence d'ultra-sons, et en ce qu'une rainure (4) de guidage de coupe suivant la trajectoire de coupe (S), est prévue dans le moule inférieur (2), à titre d'interruption de la surface de support (3).

2. Dispositif selon la revendication 1,
caractérisé en ce que la rainure (4) de guidage de coupe présente un bourrage (5) en matériau élastique, par exemple en polyuréthanneL.

3. Dispositif selon la revendication 1 ou 2,
caractérisé en ce que le moule inférieur (2) présente, pour le maintien des pièces moulées (F), des canaux (6), pouvant être mis sous vide, qui débouchent dans la zone voisine de la rainure (4) de guidage de coupe.
